(19) Europäisches Patentamt
European Patent Office
Office européen des brevets

(11) Numéro de publication: **0 409 680 A1**

(12) **DEMANDE DE BREVET EUROPEEN**

(21) Numéro de dépôt: **90401811.6**

(22) Date de dépôt: **26.06.90**

(51) Int. Cl.[5]: **B01J 37/20**, B01J 37/16, B01J 8/10, F26B 11/04

(30) Priorité: **17.07.89 FR 8909685**

(43) Date de publication de la demande: **23.01.91 Bulletin 91/04**

(84) Etats contractants désignés: **AT BE CH DE DK ES FR GB GR IT LI LU NL SE**

(71) Demandeur: **EURECAT EUROPEENNE DE RETRAITEMENT DE CATALYSEURS**
**Quai Jean Jaurès B.P. 45**
**F-07800 La Voulte-sur-Rhône(FR)**

(72) Inventeur: **Berrebi, Georges**
**17, rue Barnave**
**F-26500 Bourg Les Valence(FR)**
Inventeur: **Roumieau, Raymond**
**24, Faubourg St. Jacques**
**F-26000 Valence(FR)**
Inventeur: **Ackermann, François**
**15, quai du Pont, Beauchaftel**
**F-07800 La Voulte sur Rhône(FR)**

(74) Mandataire: **Andreeff, François et al**
**INSTITUT FRANCAIS DU PETROLE** 4, avenue **de Bois-Préau**
**F-92502 Rueil-Malmaison(FR)**

(54) **Procédé de prétraitement d'un catalyseur de raffinage.**

(57) L'invention concerne un procédé de prétraitement d'un catalyseur de raffinage ou de la pétrochimie consistant en fonction de la nature du catalyseur soit à incorporer du soufre dans la masse catalytique soit à réduire chimiquement les métaux actifs de la masse catalytique.

L'invention est caractérisée en ce que une partie au moins de ce prétraitement est effectuée dans une virole tournante dans laquelle sont répartis en cercles concentriques des tubes de chauffage.

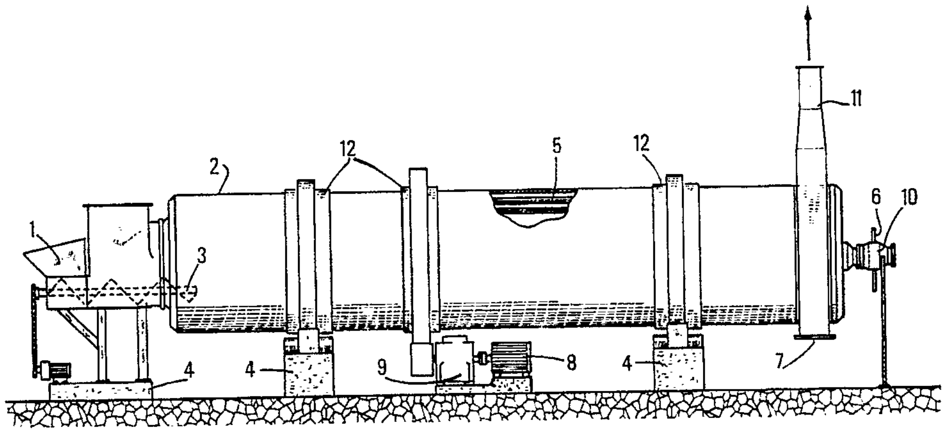


EP 0 409 680 A1

Xerox Copy Centre

Dans l'industrie on utilise parfois, pour les opérations de séchage de particules pulvérulentes de granulométries diverses, des fours rotatifs constitués par une virole tournante. A titre d'exemple on peut notamment utiliser deux types d'appareillage respectivement appelés sécheur monotube à tubes d'échange internes et sécheur monotube à chauffage externe. Ces types d'appareil sont parfois appelés : appareil à tubes de vapeur "LOUISVILLE".

Sécheur monotube à tubes d'échange internes (S.T.D.) :

Cet appareil est essentiellement constitué par une virole tournante dans laquelle sont répartis en cercles concentriques des tubes de chauffage. Ces tubes sont alimentés par un dispositif spécial en vapeur saturée en eau chaude ou en fluide caloporteur.

Ce sécheur trouve sa meilleure utilisation dans l'industrie chimique et notamment pour :
- le séchage des matières plastiques,
- l'évaporation de solvants (dans ce cas, l'étanchéïté de l'appareil est renforcée par l'emploi de joints spéciaux,
- le séchage des produits thermo sensibles,
- le traitement des produits nécessitant des temps de séjour très longs,
- la calcination des produits pulvérulents fins (carbonates de soude, gypse chimique, etc.).

Les principaux avantages du sécheur à tubes internes sont les suivants :
- haut rendement thermique,
- entraînement de poussières minime,
- température de séchage limitée par la pression de vapeur (particulièrement intéressante pour les produits thermo-sensibles),
- simplicité de marche et automaticité,
- possibilité d'obtention de siccité très poussée sans surchauffage grâce à un temps de séjour prolongé.

Sécheur monotube à chauffage externe (T.I.) :

Ce sécheur est composé d'une virole tournante dans une enceinte parcourue par des gaz de combustion.

Le sécheur monotube à chauffage externe trouve son application toutes les fois qu'il est nécessaire de sécher un produit à haute température sans que celui-ci soit en contact avec des gaz de séchage.

Dans la présente invention, on a découvert que les appareillages décrits ci-dessus, et plus en détail ci-dessous, conviennent parfaitement dans les procédés de prétraitement des catalyseurs de raffinage ou de pétrochimie qu'ils soient à l'état neuf ou qu'ils proviennent d'une unité de régénération ou d'activation ou de réactivation.

Le catalyseur traité conformément à l'invention est utilisé sous forme de particules solides, ces particules pouvant avoir diverses formes telles que billes, concassés, extrudés, pastilles, etc.

On distinguera deux types de catalyseurs nécessitant des traitements distincts que l'on appellera respectivement catalyseurs d'une première classe et catalyseurs d'une deuxième classe. Certains des catalyseurs de raffinage doivent généralement être présulfurés et éventuellement réduits en présence d'hydrogène avant de pouvoir être utilisés ou réutilisés dans des réactions de conversion d'hydrocarbures, c'est-à-dire avant d'être mis en contact avec les hydrocarbures ou la charge d'hydrocarbures à traiter. C'est le cas notamment des catalyseurs d'hydrodésulfuration.

Les catalyseurs activables, réactivables ou régénérables de cette première classe de catalyseurs sont notamment les catalyseurs de traitement, d'hydrotraitement, de viscoréduction et de conversion ou d'hydroconversion d'hydrocarbures et/ou de coupes d'hydrocarbures d'origines diverses ; par exemple, à titre de coupes d'hydrocarbures, on citera des charges liquides en provenance de distillats issus de bruts pétroliers lourds, de résidus de la distillation d'hydrocarbures atmosphérique et sous vide, en provenance d'effluents de la liquéfaction du charbon, etc. On citera encore les charges liquides d'origine pétrolière ou non, destinées à subir l'un ou l'autre des traitements choisis, par exemple parmi la déshydratation, l'hydrosulfuration, l'hydrodénitrification, la désulfuration, l'hydrodésulfuration, la déshydrohalogénation, le reformage, les réactions de production d'hydrocarbures aromatiques, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallisation, etc.

Lors de tels traitements catalytiques, on constate une désactivation souvent rapide du catalyseur due à la présence de poisons catalytiques, à la formation de coke, au dépôt de certains métaux etc. Cette désactivation nécessite le remplacement fréquent de tout ou partie du lit catalytique.

Le catalyseur est à base d'au moins un oxyde d'un métal (aluminium par exemple) ou de métalloïde (silicium par exemple). Généralement le catalyseur est constitué (a) d'un support (ou matrice) à base d'un tel oxyde (b) d'une phase active renfermant au moins un métal, accompagné ou non de précurseurs ou promoteurs métalliques.

Parmi les supports, on peut citer à titre d'exemples, toutes les variétés d'alumine, les silices, les silices-alumines, tous ces divers oxydes étant utilisés sous une forme amorphe ou sous une forme cristallisée (zéolites) ou sous forme de mélange d'oxydes amorphes et cristallisés. On peut citer encore, à titre d'oxydes utilisables comme supports, utilisés seuls ou en mélange, les magnésies, les bauxites, les argiles, les kieselguhrs, les silices-magnésies, les alumines magnésies, les alumine-bores, etc.

Parmi les métaux constituant la phase active du catalyseur, on peut citer pratiquement tous les métaux de la classification périodique des éléments et en particulier, utilisés seuls ou en mélange, le fer, le cobalt, le nickel, le tungstène, le molybdène, le cuivre, l'argent, l'or, les métaux nobles de la famille du platine, le germanium, l'étain, le plomb, l'indium, le thallium, le titane, le rhénium, le manganèse, le chrome, le vanadium, etc. Ces métaux sont utilisés, par exemple, sous forme métallique, ou sous forme oxyde ou sulfure (notamment les oxydes et sulfures de cobalt, molybdène, tungstène, nickel, fer).

L'activation ou la réactivation ou la régénération de catalyseurs nécessite généralement au moins une étape de chauffage de catalyseur pour éliminer de chaque grain ou particule catalytique au moins un type d'impuretés. Ainsi, par exemple, les catalyseurs qui ont été utilisés dans les réactions de désulfuration ou hydrodésulfuration d'hydrocarbures renferment des teneurs importantes de soufre et de carbone, éléments qu'il convient d'éliminer avant réutilisation du catalyseur.

Ainsi l'invention s'applique en particulier à la mise en oeuvre du procédé de régénération décrit dans le brevet US-A-4530917 de la demanderesse, c'est-à-dire d'un procédé de traitement d'un catalyseur neuf ou régénéré renfermant un support à base d'au moins un oxyde d'un métal ou d'un métalloïde et au moins un métal actif, réalisé en l'absence d'hydrogène et consistant à traiter le dit catalyseur à l'aide d'au moins un agent de sulfuration utilisé en solution dans un solvant, ledit agent ayant la formule :

$R - S_{(n)} - R'$

où n est un nombre entier de 3 à 20 et où les radicaux R et R', identiques ou différents, représentent chacun un radical organique renfermant chacun 1 à 150 atomes de carbone par molécule, ces radicaux étant choisis dans le groupe constitué par les radicaux alkyles, saturés ou insaturés, linéaires ou ramifiés ou de type naphténique, les radicaux aryles, les radicaux alkylaryles et les radicaux arylalkyles, R' pouvant aussi représenter l'atome d'hydrogène.

On réalise ce procédé en vue d'effectuer ultérieurement, en présence d'hydrogène, la sulfuration totale ou partielle, c'est-à-dire en quantité stoechimétriques ou non, du ou des métaux dits actifs entrant dans la composition du catalyseur.

On peut citer à titre d'exemple préféré de polysulfure le ditertiododécylpolysulfure (n = 5) et le ditertiononylpolysulfure (n = 5).

Le présent procédé peut être effectué dans des conditions particulières décrites dans le brevet US-A-4719195 de la demanderesse, ce procédé perfectionné étant effectué en deux étapes, procédé dans lequel, dans une première étape réalisée "ex-situ" entre 0 et 50 °C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$R - S_{(n)} - R'$

où n est un nombre entier de 3 à 20 et où R' représente un atome d'hydrogène ou un autre radical identique ou différent du radical R, ces deux radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode caractérisée en ce que (a) on traite (première partie de la deuxième étape) le catalyseur, en l'absence d'hydrogène et en présence d'un gaz inerte ou d'un gaz non inerte, pendant au moins 5 minutes environ, "in-situ" ou "ex-situ", à une température comprise entre 65 et 275 °C, sous une pression comprise entre environ 0,5 et 70 bars, le catalyseur étant à ce stade éventuellement séché, (b) on traite ensuite ce catalyseur (deuxième partie de la deuxième étape), pendant au moins 1 minute environ à une température d'au moins 275 °C.

En première étape, on peut opérer en présence de 0,4 à 8 % en poids par rapport au poids de polysulfure d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou les polyalcools renfermant 5 à 14 atomes de carbone par molécule et les acides ou les polyacides organiques renfermant 3 à 14 atomes de carbone par molécule.

D'autres composés à base de soufre peuvent être utilisés pour réaliser l'incorporation de soufre

dans la masse catalytique. On peut ainsi utiliser la méthode décrite dans la demande de brevet français n° 88/01905 du 16 février 1988 qui concerne un procédé de traitement d'un catalyseur neuf ou régénéré renfermant un support à base d'au moins un oxyde d'un métal ou d'un métalloïde et au moins un métal actif, en vue d'effectuer ultérieurement, en présence d'hydrogène la sulfuration totale ou partielle, c'est-à-dire, en quantités stoechiométriques ou non, du ou des métaux dits actifs entrant dans la composition du catalyseur, le procédé étant caractérisé en ce que le catalyseur, neuf ou régénéré, est traité "ex-situ" à l'aide d'au moins le dit agent de sulfuration que l'on introduit entre 0 et 50° C en quantités requises dans la porosité du catalyseur.

Ici, l'agent de sulfuration est un polysulfure organique, qui est défini essentiellement par ses méthodes de préparation ; en effet, ces polysulfures résultent des mélanges complexes d'oléfines polysulfurées essentiellement définies par les procédés permettant de les obtenir (brevet Européen n° 15 9936 et demande de brevet français n° 27/07560.

Les principales étapes des procédés de synthèse de ces polysulfures comportent :

1. La réaction d'au moins un composé choisi parmi un chlorure et/ou d'un dichlorure de soufre avec au moins une oléfine ou un mélange d'oléfines de $C_2$ à $C_{12}$ pour former un produit d'addition (ou "adduct") ;
2. Le mélange de l'"adduct" avec au moins un monohalogénure organique, fonctionnel ou non, pour former un mélange halogéné ;
3. La réaction du dit mélange halogéné avec au moins un polysulfure alcalin dans un milieu aqueux et/ou alcoolique pour former une oléfine polysulfurée pouvant contenir jusqu'à 65 % de soufre en masse. Ledit agent de sulfuration est utilisé en solution dans un solvant. Ce solvant peut être par exemple de l'eau ou un alcool.

On peut également utiliser la méthode décrite dans la demande de brevet français n° 88/05272 du 19 avril 1988 qui concerne un procédé de traitement d'un catalyseur neuf ou régénéré, renfermant un support à base d'au moins un oxyde d'un métal ou d'un métalloïde et au moins un métal actif, en vue d'effectuer ultérieurement en présence d'hydrogène, la sulfuration totale ou partielle, c'est-à-dire, en quantité stoechiométrique ou non, du ou des métaux dits actifs entrant dans la composition du catalyseur, le procédé étant caractérisé en ce que le catalyseur, neuf ou régénéré, est traité "ex-situ" à l'aide d'au moins le dit agent de sulfuration que l'on introduit entre 0 et 50° C en quantités requises dans la porosité du catalyseur.

Ici, l'agent de sulfuration est donc un polysulfure qui mélange complexes d'oléfines polysulfurées essentiellement définies par les procédés permettant de les obtenir (demande de brevet Européen EP-A-402 252 et demande de brevet français n° 87/16 847).

Les principales étapes des procédés de synthèse de ces polysulfures comportent :

- une étape (1) dans laquelle on fait réagir au moins un composé choisi parmi les chlorures de soufre, par exemple parmi le monochlorure et la dichlorure de soufre avec au moins une monooléfine aliphatique de 2 à 12 atomes de carbone de manière à former un produit d'addition ou "adduct".
- une étape (2) dans laquelle on fait réagir, dans un milieu alcoolique ou hydro alcoolique au moins un produit d'addition obtenu par une étape telle que (1) avec au moins un mercaptate $R'SM$ et/ou un mercaptate-polysulfure répondant à la formule générale $R'S_xM$, formules dand lesquelles $R'$ représente un radical aliphatique, renfermant par exemple de 1 à 14 atomes de carbone, ce radical aliphatique pouvant comporter au moins un groupement fonctionnel (par exemple au moins un groupe d'hydroxyle), un radical aromatique, éventuellement substitué par un ou plusieurs radicaux aliphatiques et renfermant par exemple de 6 à 14 atomes de carbone ; ou un radical hétérocyclique renfermant au moins un hétératome choisi parmi l'azote, le soufre et l'oxygène ; M représente un atome ou un groupement monovalent correspodant à une base minérale de formule générale MOH ; et x prend une valeur moyenne d'au moins 1 et pouvant aller par exemple jusqu'à environ 7. Le but est de former une oléfine polysulfure pouvant contenir jusqu'à 65 ; en masse de soufre.

Comme autres composés à base de soufre permettant, selon l'invention, l'incorporation de soufre dans la masse catalytique, on peut citer également des composés choisis dans le groupe constitué par les thiourées, les thiophénols, les thioesters, les thiodiazoles, les thiocyanates, les thioamides, les thioacides et les thiosemicarbazides. On peut citer à titre d'exemple l'acide thiobenzoïque, le 2-thiocrésol, le 3-thiocrésol, le 4-thiocrésol, l'acide 3,3' thiodipropionique, le 3,3' thiodi propionitrile, le 2,3,6 triméthyl thiophénol, le méthyl thioglycollate, le 4-méthyl 3-thiosemicarbazide, le naphtahalène 2-thiol, le phényl isothiocyanate, le 2 phényl thiophénol, le thioacétamide, le thiobenzamide, le 2,6 diméthyl thiophénol, le 3,5 diméthyl thiophénol, le 2,2' dinitrodiphényl disulphide, la 2,5-dithiobiurée, l'éthyl thioglyacollate, le 2-méthoxy thiophénol, le 3-méthoxy thiophénol, le 2-méthyl 5-mercapto 1,3,4-thiadiazole, l'amidinothiourée, le 2-amino 5-éthylthio 1,3,4-thiadiazole, le 2-amino 5-mercapto 1,3,4-thiadiazole, le 3-amino 5-mercapto 1,2,4-triazole, le 2-amino thiophénol, le benzène 1,3-dithiol, le 3-chloro thiophénol et le 2,5-dimercapto 1,3,4-thiadiazole.

On peut également utiliser d'autres composés soufrés et, par exemple les mercapto-alcools de formule :

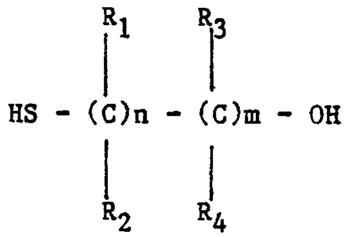

où n et m sont des nombres entiers, $R_1$, $R_2$, $R_3$, $R_4$, identiques ou différents sont des atomes d'hydrogène ou des radicaux organiques alkyle, aryle, aralkyle, alkylaryle etc... ayant 1 à 20, de préférence 1 à 6, atomes de carbone par molécule ; de préférence n = 1-10 (par exemple 1-2) et m = 1-10 (par exemple 1-2).

A titre d'exemple, on citera les 2-mercaptoéthanol, 1-mercapto-2-propanol, 1-mercapto-2-butanol, 3-mercapto-1-propanol, 1-mercapto-2-hexanol, 2-mercaptocyclohexanol, 2-mercaptocyclopentanol, 3-mercaptobicyclo (2,2,1)-heptane-2-ol-mercapto-2-pentanol, 1-mercapto-2-phényl-2-éthanol, 3-mercapto-3-phely-propane-1-ol, 2-mercapto-3-phely-propane-1-ol, thioglycérol, l'acide 9-mercapto 10-hydroxyoctadécanoïque et l'acide 10-mercapto 10-hydroxyoctadécanoïque. On citera plus particulièrement les composés de formule $HS-CH_2-CH_2OH$ (2 mercaptoéthanol) et $HS-CH_2-C\ (C_6H_5)\ H-OH$ (1-mercapto-2-phényl-2 éthanol).

On peut utiliser d'une façon plus générale les thiols (thioalcools, mercaptans, thiophénols) de formule $R_1-SH$ où R est un radical organique, les thioéthers de formule $R_1-S-R_2$, les disulfures organiques de formule $R_1-S-S-R_2$.

On citera ainsi les alkylmercaptans (tel que le n-butyl mercaptan, le n-hexylmercaptan), les monothioglycols (tel que le monothioéthylène glycol), les dithioglycols tel que le dithiopropylène glycol, les arylmercaptans déjà cités ci-dessus (thiophénols) (tels que le thiophénol, les thiocrésols) les dithiobenzènes (tel que la dithiorésorcine), les hétérocycles substitués par des groupes mercapto (tels que la mercaptopyridine, la mercaptopyrimidine etc.). Comme exemple de thioéthers, on citera les dialkyle sulfures (tels que les di-n-butyl sulfures, les ditertio butyl sulfures), les dihydroxyalkyle sulfures (tel que le thiodiéthylène glycol ($S(CH_2CH_2OH)_2$), le thiodipropylèneglycol etc.) les diaryl sulfures (diphényl sulfure etc.), les diaralkyl sulfures (dibenzyl sulfure etc.) les alkyl ethers, les thiophénols (thioanisole etc.), les thioéthers cycliques et leurs dérivés substitués (éthylène sulfure, thiophène, thiazole, thiopyrone, thioxanthone, thioxanthydrol, 1, 4 thioxane etc., les S-alkyle éthers des hétérocycles substitués par des mercaptans (2-méthyl-thio 4,6-diamino pyrimidine etc.).

Parmi les familles des composés précédents, on citera plus particulièrement le diméthyl sulfoxyde, l'éthylthiol éthanol, l'acide thio glycolique, le di thio glycol et les disulfures organiques de formule notamment $HO-R_1-S-S-R_2-OH$

ou

$HO-(CH_2)_x-S-(CH_2)_{x'}-S-(CH_2)_{x''}-OH$

où $R_1$ et $R_2$ sont définis comme précédemment, où x, $x'$ et $x''$, identiques ou différents sont un nombre entier.

On peut citer plus particulièrement à titre d'exemple le diéthanol disulfure ou 2,2 dithiobis éthanol ou DEODS de formule

$HO-C_2H_4-S-S-C_2H_4-OH$

soluble notamment dans l'eau, les glycols et les polyglycols.

Dans les méthodes rappelées ci-dessous et notamment lorsque le composé soufré est un polysulfure organique, on peut au cours de l'étape d'incorporation de soufre dans la masse catalytique ajouter en poids 0,1 à 10 % d'au moins un composé azoté, poids exprimé en azote, par rapport au poids de polysulfure(s). Cette technique est décrite dans la demande de brevet FR-A-88/04253 du 29 mars 1988 de la demanderesse.

Ce composé azoté est choisi de préférence dans le groupe constitué par les composés ammoniaqués organiques ou minéraux, les composés ammonium quaternaire, l'ammoniac et ses dérivés, les nitrites, les composés nitrile ammonium, les dérivés nitrés, les composés nitreux et nitrosés, les composés nitro aromatiques tel le nitro benzène, les amines primaires, secondaires et tertiaires, les diamines et polyamines, les dites amines étant des alkylamines, des arylaminés et des alkylaryl ou arylalkylaminés, par exemple on citera les dérivés triméthylphényl ammonium. On peut citer, parmi les arylamines, l'aniline, la méthylaniline, le diméthylaniline, la diphénylamine, la triphénylamine.

On peut utiliser également les toluidines ortho, méta ou para, les naphtylamines (notamment l'alpha ou le béta naphtylamine), les composés diazoïques et les azoïques, les composés hydrazoïques, les phénylhydrazines. On peut utiliser également les polyamines aliphatiques et aromatiques, les diamines dérivées du benzène (phénylène diamines), la benzidine, etc., les amides substitués ou non, bisubstitués à l'azote (diacylamides et triacylamides), les amidines, les nitriles, les uréthènes, l' urée, les urées triacylamides), les amidines, les nitriles, les uréthènes, l' urée, les urées substituées, les amino-urées (semi-carbazides), les thiourées, les guanidines, les cyanamides, les phénol nitrés, les amino alcools, les amino phénols, les acides aminés, les composés azotés hétérocycliques.

Dans une autre technologie décrite dans la demande de brevet français n° 88/09049 du 1er juillet 1988 de la demanderesse, on incorpore comme additif au composé soufré, par rapport au poids de polysulfure ou des polysulfures, 0,1 à 10 % d'au moins un autre additif choisi dans le groupe constitué par le phosphore, les composés phosphorés, les halogènes et les composés halogénés.

Une autre technologie d'incorporation dans la masse catalytique d'un composé sulfuré décrite dans le brevet européen EP-B-153233 de la demanderesse consiste à imprégner le catalyseur ex-situ en l'absence d'hydrogène avec une solution aqueuse de disulfure d'ammonium $S(NH_4)_2$ à une température comprise entre 0 et 50 °C, de préférence entre 10 à 35 °C et par exemple à la température ambiante de façon à incorporer le degré adéquat de soufre dans la porosité du catalyseur, le traitement du catalyseur étant ensuite suivi d'un séchage de ce catalyseur par exemple à une température inférieure à 120 °C.

D'une façon plus particulière, et notamment lorsque l'on désire transformer en sulfures, la totalité des oxydes des métaux promoteurs que contient le catalyseur, le procédé consiste alors :

(a) à imprégner le catalyseur à une température comprise entre 0 et 50 °C à son volume d'imprégnation par une solution aqueuse de disulfure d'ammonium $S(NH_4)_2$, (de préférence on opère entre 10 et 35 °C),

(b) à sécher le catalyseur à une température inférieure à 120 °C et de préférence entre 95 à 115 °C,

(c) à imprégner à nouveau (entre 0 et 50 °C, de préférence entre 10 et 35 °C) au moins une deuxième fois le catalyseur à son volume d'imprégnation ou à un volume inférieur, en fonction de la quantité de soufre à introduire dans le catalyseur, par un mélange d'une solution aqueuse de disulfure d'ammonium $S(NH_4)_2$ et d'un additif conforme à l'invention,

(d) à sécher le catalyseur à une température inférieure à 130 °C et de préférence entre 90 et 120 °C et plus particulièrement au voisinage de 100 °C.

Dans cette technologie, on peut également ajouter un disulfure d'ammonium en présence d'au moins au additif possédant des propriétés de réducteur et qui est choisi dans le groupe constitué par les aldéhydes renfermant 4 à 14 atomes de carbone par molécule (et de préférence 5 à 12 atomes de carbone), les cétones ou polycétones renfermant 3 à 18 (et de préférence 6 à 12) atomes de carbone par molécule, les alcools ou polyalcools renfermant 5 à 14 (et de préférence 6 à 12) atomes de carbone par molécule et les acides organiques ou polyacides refermant 3 à 14 (et de préférence 6 à 12) atomes de carbone par molécule.

D'autres catalyseurs de raffinage doivent être réduits à l'hydrogène avant d'être utilisés ou réutilisés dans des réactions de conversion d'hydrocarbures, c'est-à-dire, avant d'être mis en contact avec les hydrocarbures ou la charge d'hydrocarbures à traiter. C'est le cas notamment des catalyseurs d'hydrogénation de coupes oléfiniques en provenance de craquage à la vapeur. De tels catalyseurs n'ont généralement pas à être présulfurés, le soufre étant d'ailleurs plutôt un poison de ce type de catalyseurs.

Cette deuxième classe de catalyseurs renferme généralement un support et une phase active à base d'au moins un métal du groupe VIII de la classification périodique des éléments, ce métal étant soit un métal noble de la famille du platine (platine, palladium, ruthénium, iridium, rhodium et osmium) soit un métal noble de ce groupe VIII, à savoir, le fer, le cobalt et le nickel et/ou à base d'au moins un métal du groupe Ib, à savoir, le cuivre ou l'argent ou l'or.

Dans l'art antérieur, de telles réductions sont effectuées en présence d'hydrogène. Une technique de la demanderesse décrite dans la demande de brevet européen EP-A-303525, permet d'opérer en l'absence d'hydrogène. La technique ici consiste à effectuer en partie au moins dans l'appareillage préconisé ici, la réduction du catalyseur en trois étapes :

a) on imprègne dans une première étape le catalyseur entre 0 et 50 °C, de préférence entre 0 et 40 °C et plus particulièrement entre 10 et 30 °C ou à la température ambiante, avec un solvant d'imprégnation, lequel est une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones refermant 3 à 18 (et de préférence 3 à 12) atomes de carbone par molécule, les éthers refermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), de façon à introduire 10 ppm à 100 % (en poids), de préférence 10 ppm à 50 %, ou plus particulièrement 1 000 ppm à 10 % de ce composé sur le catalyseur.

b) on élève dans une deuxième étape la température du catalyseur ainsi imprégné à une température comprise entre 100 et 150 °C et sous une pression d'1 à 10 bars (de préférence 1,2 à 5 bars et plus particulière-ment 2 à 4 bars, par

exemple 3,5 bars), de façon à provoquer un craquage ou une décomposition du composé agent réducteur. Ce craquage ou cette décomposition se traduit par la formation, essentiellement, d'oxyde de carbone qui va provoquer la réduction du catalyseur et provoquer la distribution convenable de la phase active sur le catalyseur. Ce craquage ou décomposition provoque également la formation de vapeur d'eau.

c) on sèche dans une troisième étape le catalyseur pour éliminer le solvant d'imprégnation et l'eau formée à l'étape (b).

Le solvant d'imprégnation est généralement l'eau ou tout solvant organique adéquat dans lequel le composé agent réducteur, différent du solvant choisi, est soluble. On peut citer, les alcools, les éthers, etc.

Les catalyseurs de cette deuxième classe peuvent être utilisés par exemple pour l'hydrogénation sélective des hydrocarbures insaturés, notamment ceux qui renferment de 3 à 10 atomes de carbone par molécule. Ici, les catalyseurs renferment avantageusement du nickel ou des métaux nobles tels que le palladium. Ce type de procédé est décrit dans le brevet USP 3674888. Le catalyseur est de préférence à base de palladium ou d'un composé de palladium sur de l'alumine.

A titre indicatif, la proportion de composé de palladium exprimée en palladium, est ici, usuellement comprise entre 0,1 g et 3 g pour 100 g d'alumine, par exemple, pour les réactions d'hydrogénation sélective des hydrocarbures acétyléniques et/ou dioléfiniques, les hydrogénations sélectives des essences, notamment celles contenant des composés générateurs de gommes, les catalyseurs utilisés ici peuvent également servir dans les réactions d'hydrogénation d'effluents de pyrolyse, dans les réactions d'hydrogénation de craquage et de craquage à la vapeur.

Une autre technologie consisterait, comme enseigné dans la demande de brevet français n° 89/01662 du 7 février 1989 de la demanderesse, à utiliser conjointement avec le composé réducteur, au moins un additif choisi parmi les halogènes et les composés halogénés, le poids d'additif ajouté étant compris entre 0,1 et 10 % en poids par rapport au poids de l'agent réducteur.

Le traitement du catalyseur, à savoir, une incorporation de soufre dans le cas des catalyseurs de la première classe ou une réduction du catalyseur dans le cas des catalyseurs de la deuxième classe, se produit ainsi au moins partiellement dans le four utilisé selon la présente invention. La température adéquate est obtenue par circulation à travers le lit de catalyseur disposé dans une enceinte en rotation d'un courant de vapeur sèche, ou de tout autre fluide tel que l'azote ou un autre gaz inerte (argon, hélium) ou d'un mélange d'un tel fluide et de vapeur d'eau. On dispose dans l'enceinte renfermant le lit catalytique une série de tubes creux qui sont parcourus par un fluide (par exemple de la vapeur et/ou de l'eau chaude) à l'aide duquel on obtient et on contrôle la température adéquate dans le four rotatif, cette température étant avantageusement fonction de la pression qui règne dans les tubes. Le four rotatif, comme indiqué par ailleurs, est agencé de façon à ce que pendant la rotation, les particules de catalyseurs soient amenées à être régulièrement en contact avec les tubes de chauffage.

Ainsi l'invention concerne essentiellement un procédé de prétraitement des catalyseurs de raffinage ou de pétrochimie utilisés sous forme de particules solides et pulvérulentes, ces catalyseurs étant neufs ou provenant d'une unité de régénération ou d'activation ou de réactivation, le procédé étant caractérisé en ce que une partie au moins de ce prétraitement est effectué dans une enceinte ayant sensiblement la forme d'un cylindre dont l'axe longitudinal est sensiblement horizontal, l'enceinte tournant sur elle même autour de cet axe, avec une vitesse de rotation comprise entre environ 0,1 et 10 tours par minute, les parois internes de la dite enceinte étant tapissées au moins en partie de tubes sensiblement parallèles au dit axe et généralement répartis en cercles concentriques à travers lesquels on fait circuler un fluide gazeux (inerte ou non) ou liquide, procédé dans lequel on introduit les particules catalytiques à une extrémité de l'enceinte dans le corps de cette enceinte par l'intermédiaire d'une vis sans fin ou d'un moyen équivalent tel que par exemple tube ou couloir vibrant, on traite ces particules par au moins un composé adéquat en solution aqueuse ou organique, le mélange des dites particules du composé adéquat et du solvant utilisé étant projeté sur les parois internes de l'enceinte et chauffé d'une part par contact avec les tubes qui tapissent les parois internes de l'enceinte et d'autre part par radiation de ces tubes, on recharge ensuite les particules catalytiques à l'autre extrémité de l'enceinte.

La figure unique illustre l'invention :

Le produit (catalyseur) est introduit par la conduite (1), par exemple, d'une manière continue, dans le corps (2) de la virole, par l'intermédiaire d'une vis sans fin (3). La virole est fixée au sol par les pieds tels que (4) et des colliers tels que (12). Le produit est projeté directement au contact avec les tubes de vapeur chauds (5) qui tapissent les parois internes de la virole. Les particules de catalyseur en mélange soit avec le ou les composés de présulfuration (pour les catalyseurs de la première classe définie ci-dessus) et le ou les solvants dans lequel ou lesquels sont dissous le ou les composés de présulfuration, soit avec le ou les composés réducteurs (pour les catalyseurs de la deuxième

classe définie ci-dessus) et le ou les solvants dans lequel ou lesquels sont dissous les composés réducteurs.

La vapeur ou tout autre fluide qui alimente les tubes (5) est introduite dans l'appareil par la conduite (6). Le produit (catalyseur) est rapidement chauffé dans une atmosphère très saturée, d'une part par contact avec les tubes de vapeur ou autre fluide, d'autre part par radiation de ces mêmes tubes.

Au fur et à mesure, le produit avance dans la hotte de décharge puis il est déchargé dans la hotte (7) où il est repris par un convoyeur.

En même temps que la présulfuration des catalyseurs de la première classe ou la réduction des catalyseurs de la deuxième classe, peut se produire le séchage du catalyseur.

Au cours d'un séchage par exemple la vapeur se condense dans tous les tubes de vapeur abandonnant sa chaleur latente. L'eau condensée s'écoule par gravité vers le plateau de distribution où elle est reprise à chaque rotation de l'appareil (rotation effectué par le moteur (8) et les éléments (9)) et envoyée dans une boîte aménagée dans le distributeur (10) de vapeur. Un siphon reprend cette eau condensée pour l'envoyer au purgeur automatique. La bonne évacuation de l'eau condensée est un élément primordial à la bonne marche de l'appareil.

En marche normale, la quantité de vapeur sèche et/ou d'air ou tout autre fluide tel que l'azote ou un autre gaz neutre (argon, hélium) ou d'un mélange d'un tel fluide et de vapeur d'eau doit être suffisante pour permettre l'évacuation des solvants ou de la vapeur d'eau dégagée par le produit lors du traitement.

Le tirage peut se faire soit naturellement, soit au moyen d'un ventilateur d'extraction ou encore par un dépoussiéreur type "ROTOCLONE" (11).

La quantité totale de catalyseur dans cette zone de traitement est comprise habituellement entre 500 et 3 000 kg.

Les conditions utilisées permettent un bon écoulement du catalyseur dans l'enceinte sans abimer les grains de catalyseur. La température est contrôlée par des thermocouples fixés sur la virole du four. Ces thermocouples au nombre de 1 à 8 habituellement sont répartis sur toute la longueur du four et sont en contact avec le catalyseur. Ils permettent de contrôler en continu la température de traitement.

## Revendications

1. Procédé de pretraitement des catalyseurs de raffinage ou de pétrochimie utilisés sous forme de particules solides et pulvérulentes, ces catalyseurs étant neufs ou provenant d'une unité de régénération ou d'activation ou de réactivation, le procédé étant caractérisé en ce que une partie au moins de ce prétraitement est effectué dans une enceinte ayant sensiblement la forme d'un cylindre dont l'axe longitudinal est sensiblement horizontal, l'enceinte tournant sur elle-même autour de cet axe, avec une vitesse de rotation comprise entre environ 0, 1 et 10 tours par minute, les parois internes de la dite enceinte étant tapissées au moins en partie de tubes creux sensiblement parallèles au dit axe à travers lesquels on fait circuler un fluide gazeux (inerte ou non) ou liquide, procédé dans lequel on introduit les particules catalytiques à une extrémité de l'enceinte dans le corps de cette enceinte par l'intermédiaire d'une vis sans fin ou d'un moyen équivalent tel que par exemple tube ou couloir vibrant, on traite ces particules par au moins un composé adéquat en solution aqueuse ou organique, le mélange des dites particules du composé adéquat et du solvant utilisé étant projeté sur les parois internes de l'enceinte et chauffé d'une part par contact avec les tubes qui tapissent les parois internes de l'enceinte et d'autre part par radiation de ces tubes, on décharge ensuite les particules catalytiques à l'autre extrémité de l'enceinte.

2. Procédé selon la revendication 1 appliqué à une technique de traitement d'un catalyseur neuf ou régénéré renfermant un support à base d'au moins un oxyde d'un métal ou d'un métalloïde et au moins un métal actif, réalisé en l'absence d'hydrogène et consistant à traiter ledit catalyseur à l'aide d'au moins un agent de sulfuration utilisé en solution dans un solvant, ledit agent ayant la formule :

$R - S_{(n)} - R'$

où n est un nombre entier de 3 à 20 et où $R'$ représente un atome d'hydrogène ou un autre radical identique ou différent du radical R, ces deux radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, $R'$ pouvant aussi représenter l'atome d'hydrogène.

3. Procédé selon la revendication 2 de traitement d'un catalyseur, en vue d'effectuer ultérieurement, en présence d'hydrogène, la sulfuration totale ou partielle, c'est-à-dire, en quantités stoéchiométriques ou non, du ou des métaux dits actifs entrant dans la composition du catalyseur, le procédé étant caractérisé en ce que ledit catalyseur, neuf ou régénéré, est traité à l'aide d'au moins ledit agent de sulfuration que l'on introduit entre 0 à 50 °C en quantités requises dans la porosité du catalyseur.

4. Procédé selon le revendication 1 appliqué à une

technique de traitement en deux étapes d'un catalyseur neuf ou régénéré renfermant (a) un support à base d'au moins un oxyde d'un métal ou d'un métallöide et (b) au moins un métal actif, procédé dans lequel, dans une première étape réalisée entre 0 et 50 ° C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$R - S_{(n)} - R'$

où n est un nombre entier de 3 à 20 et où R' représente un atome d'hydrogène ou un autre radical identique ou différent du radical R, ces 2 radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode qui consiste en ce que (a) on traite (première partie de la deuxième étape) le catalyseur, en l'absence d'hydrogène et en présence d'un gaz inerte ou d'un gaz non inerte, pendant au moins 5 minutes environ, à une température comprise entre 65 et 275 ° C, sous une pression comprise entre environ 0,5 et 70 bars (0,05 et 7 MPa), le catalyseur étant à ce stade éventuellement séché, (b) on traite ensuite ce catalyseur (deuxième partie de la deuxième étape), pendant au moins 1 minute environ à une température d'au moins 275 ° C.

5. Procédé selon l'une des revendications 2 à 4 caractérisé en ce que l'on opère en présence de 0,4 à 8 % en poids par rapport au poids de polysulfure d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou les polyalcools renfermant 5 à 14 atomes de carbone par molécule et les acides ou les polyacides organiques renfermant 3 à 14 atomes de carbone par molécule.

6. Procédé selon la revendication 1 appliqué à une technique de traitement d'un catalyseur neuf ou régénéré renfermant un support à base d'au moins un oxyde d'un métal ou d'un métalloïde et au moins un métal actif, réalisé en l'absence d'hydrogène et caractérisé en ce que l'on traite ledit catalyseur à l'aide d'au moins un agent de sulfuration utilisé en solution dans un solvant, ledit agent consistant en un produit étant obtenu au terme d'un procédé de synthèse qui consiste à (a) faire réagir au moins un composé choisi parmi, un chlorure et dichlorure de soufre avec au moins une oléfine ou un mélange d'oléfines comportant 2 à 12 atomes de carbone par molécule, en vue de former un produit d'addition, (ou "adduct") (b) à mélanger ledit produit d'addition avec au moins un monohalogénure organique fonctionnel ou non pour former un mélange halogéné (c) à faire réagir ledit mélange halogéné avec au moins un polysulfure alcalin dans un milieu aqueux et/ou alcoolique en vue de former une oléfine polysulfurée pouvant contenir jusqu'à 65 % en masse de soufre.

7. Procédé selon la revendication 1 appliqué à une technique de traitement d'un catalyseur neuf ou régénéré renfermant un support à base d'au moins un oxyde d'un métal ou d'un métalloïde et au moins un métal actif, réalisé en l'absence d'hydrogène et caractérisé en ce que l'on traite ledit catalyseur à l'aide d'au moins un agent de sulfuration utilisé en solution dans un solvant, ledit agent consistant en un produit qui est obtenu au terme d'un procédé en deux étapes qui consiste :

(a) à faire réagir au moins un composé choisi parmi les chlorures de soufre avec au moins une oléfine ou un mélange d'oléfines comportant 2 à 12 atomes de carbone par molécule, en vue de former un produit d'addition, (ou "adduct"),

(b) à faire réagir ledit "adduct" avec au moins un mercaptate ou un mercaptatepolysulfure alcalin dans un milieu aqueux et/ou alcoolique en vue de former une oléfine polysulfure pouvant contenir jusqu'à 65 % en masse de soufre, lesdits mercaptates et mercaptates-polysulfures répondant respectivement aux formules générales R'SM et R'SxM dans lesquelles R' représente un radical aliphatique renfermant de 1 à 14 atomes de carbone, ce radical aliphatique pouvant comporter au moins un groupement fonctionnel (par exemple au moins un groupe hydroxyle), un radical aromatique, éventuellement substitué par un ou plusieurs radicaux aliphatiques et renfermant de 6 à 14 atomes de carbone ou un radical hétérocyclique au moins un hétéroatome choisi parmi l'azote, le soufre et l'oxygène, M représentant un atome ou un groupement monovalent correspondant à une base minérale de formule générale MOH, et x prenant une valeur moyenne d'au moins 1 et pouvant aller jusqu'à environ 7.

8. Procédé selon la revendication 1 appliqué à une technique de traitement d'un catalyseur neuf ou régénéré renfermant un support à base d'au moins un oxyde d'un métal ou d'un métalloïde et au moins un métal actif, réalisé en l'absence d'hydrogène et consistant à traiter ledit catalyseur avec une solution aqueuse de disulfure d'ammonium à une température comprise entre 0 et 50° C.

9. Procédé selon la revendication 8, de traitement d'un catalyseur neuf ou régénéré renfermant un support à base d'au moins un oxyde d'un métal ou d'un métalloïde et au moins un métal actif, en vue d'effectuer ultérieurement en présence d'hydrogène, la sulfuration totale ou partielle, c'est-à-dire, en quantité stoechiométrique ou non, du ou des métaux dits actifs entrant dans la composition du catalyseur, ledit procédé consistant (a) à imprégner "ex-situ" ledit catalyseur neuf ou régénéré en l'absence d'hydrogène avec une solution aqueuse de disulfure d'ammonium à une température comprise entre 0 et 50° C et (b) à sécher la masse catalytique à une température inférieure à 120° C.

10. Procédé selon l'une des revendication 8 et 9 dans lequel en outre, au cours de l'imprégnation du disulfure d'ammonium dans le catalyseur, on introduit également, en poids par rapport au soufre introduit dans le catalyseur, de 0,4 à 8 % d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou polyalcools organiques renfermant 3 à 14 atomes de carbone par molécule et les acides ou les polyacides organiques renfermant 3 à 14 atomes de carbone par molécule.

11. Procédé selon la revendication 1 appliqué à une technique de traitement d'un catalyseur neuf ou régénéré renfermant un support à base d'au moins un oxyde d'un métal ou d'un métalloïde et au moins un métal actif, réalisé en l'absence d'hydrogène et consistant à traite ledit catalyseur à l'aide d'au moins un agent de sulfuration utilisé en solution dans un solvant, ledit agent étant choisi dans le groupe constitué par les thioesters, les thiodiazoles, les thiocyanates, les thioamides, les thioacides, les thiosemicarbazides , les mercaptoalcools de formule :

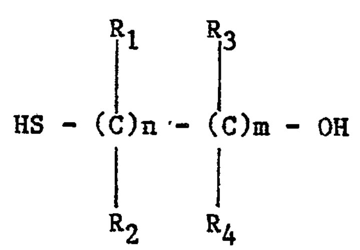

où n et m sont des nombres entiers, $R_1$, $R_2$, $R_3$, $R_4$, identiques ou différents sont des atomes d'hydrogène ou des radicaux organiques alkyle, aryle, aralkyle, alkylaryle, les thiols de formule $R_1$-SH où R est un radical organique, les thioéthers de formule $R_1$-S-$R_2$, les disulfures organiques de formule $R_1$-S-S-$R_2$ et plus particulièrement les disulfures organiques de formule notamment

HO-$R_1$-S-S-$R_2$-OH

ou

HO-$(CH_2)x$-S-$(CH_2)x'$-S-$(CH_2)x''$-OH

où $R_1$ et $R_2$ sont définis comme précédemment ou x, x′ et x″, identiques ou différents sont un nombre entier.

12. Procédé selon la revendication 11 de traitement d'un catalyseur, en vue d'effectuer ultérieurement, en présence d'hydrogène, la sulfuration totale ou partielle, c'est-à-dire, en quantité stoechiométrique ou non, du ou des métaux dits actifs entrant dans la composition du catalyseur, le procédé étant caractérisé en ce que ledit catalyseur, neuf ou régénéré, est traité à l'aide d'au moins ledit agent de sulfuration que l'on introduit entre 0 et 50° C en quantités requises dans la porosité du catalyseur.

13. Procédé selon la revendication 1 appliqué à une technique de traitement en deux étapes d'un catalyseur neuf ou régénéré renfermant (a) un support à base d'au moins un oxyde d'un métal ou d'un métallöide et (b) au moins un métal actif, procédé dans lequel, dans une première étape réalisée "ex-situ" entre 0 et 50° C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$R - S_{(n)} - R'$

où n est un nombre entier de 3 à 20 et où R′ représente un atome d'hydrogène ou un autre radical identique ou différent du radical R, ces 2 radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode dans laquelle (a) on traite (première partie de la deuxième étape) le catalyseur, en l'absence d'hydrogène et en présence d'au moins de la vapeur d'eau ou d'au moins un gaz inerte humide pendant au moins 5 minutes environ, "in-situ" ou ex-situ", à une température comprise entre 65 et 275° C, sous une pression comprise entre environ 0,5 et 70 bars (0,05 et 7 MPa), le catalyseur étant à ce stade éventuellement séché, (b) on traite ensuite ce catalyseur (deuxième partie de la deuxième étape), pendant au moins 1 minute environ à une température d'au moins 275° C, en présence d'hydrogène, le procédé étant caractérisé en ce que au cours de la première étape on ajoute en poids, 0,1 à 10 % d'au moins un composé azoté, poids exprimé en azote, par rapport au poids de polysulfure ou des polysulfures.

14. Procédé selon la revendication 13 dans lequel ledit composé azoté est choisi dans le groupe constitué par les composés ammoniaqués organiques ou minéraux, les composés ammonium quatenaire, l'ammoniac et ses dérivés, les nitrites, les composés nitrile ammonium, les dérivés nitrés, les composés nitreux et nitrosés, les composés nitroaromatiques, les amines primaires, secondaires et tertiaires, les dia-mines et polyamines, les toluidines, les naphtylamines, les composés diazoïques et les azoïques, les composés hydrazoïques, les phenylhydrazines, les polyamines, les diamines dérivés du benzène, les amides, les amidines, les nitriles, les uréthanes, l'urée, les urées substituées, les amino-urées, les thio-urées, les guanidines, les cyanamides, les phénol nitrés, les amino-alcools, les amino phénols, les acides aminés, les composés azotés hétérocycliques.

15. Procédé selon des revendication 2 à 4 dans lequel on ajoute en poids (poids exprimé en halogène ou en phosphore), par rapport au poids de polysulfure ou des polysulfures, 0,1 à 10 % d'au moins un additif choisi dans le groupe constitué par le phosphore, les composés phosphorés, les halogènes et les composés halogénés.

16. Procédé selon la revendication 1 appliqué à une technique de réduction d'un catalyseur de raffinage renfermant un support et une phase active à base d'au moins un métal du groupe VIII de la classification périodique des éléments caractérisé en ce que, avant la mise en oeuvre de ce catalyseur dans une zone de réaction de raffinage, on réalise un traitement en trois étapes consistant :

(a) à imprégner le catalyseur entre 0 et 50° C, avec une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), de façon à introduire 10 ppm à 100 % (en poids), de ce composé sur le catalyseur.

(b) à élever la température du catalyseur ainsi impregné à une température comprise entre 100 et 150° C et sous une pression de 1 à 10 bars

(c) à sécher le catalyseur pour éliminer le solvant d'imprégnation et l'eau formée à l'étape (b).

17. Procédé selon la revendication 16 caractérisé en ce que, au cours de la première étape, on ajoute à l'agent réducteur, au moins un additif choisi parmi les halogènes et les composés halogénés, le poids d'additif ajouté étant compris entre 0,1 et 10 % en poids par rapport au poids de l'agent réducteur.

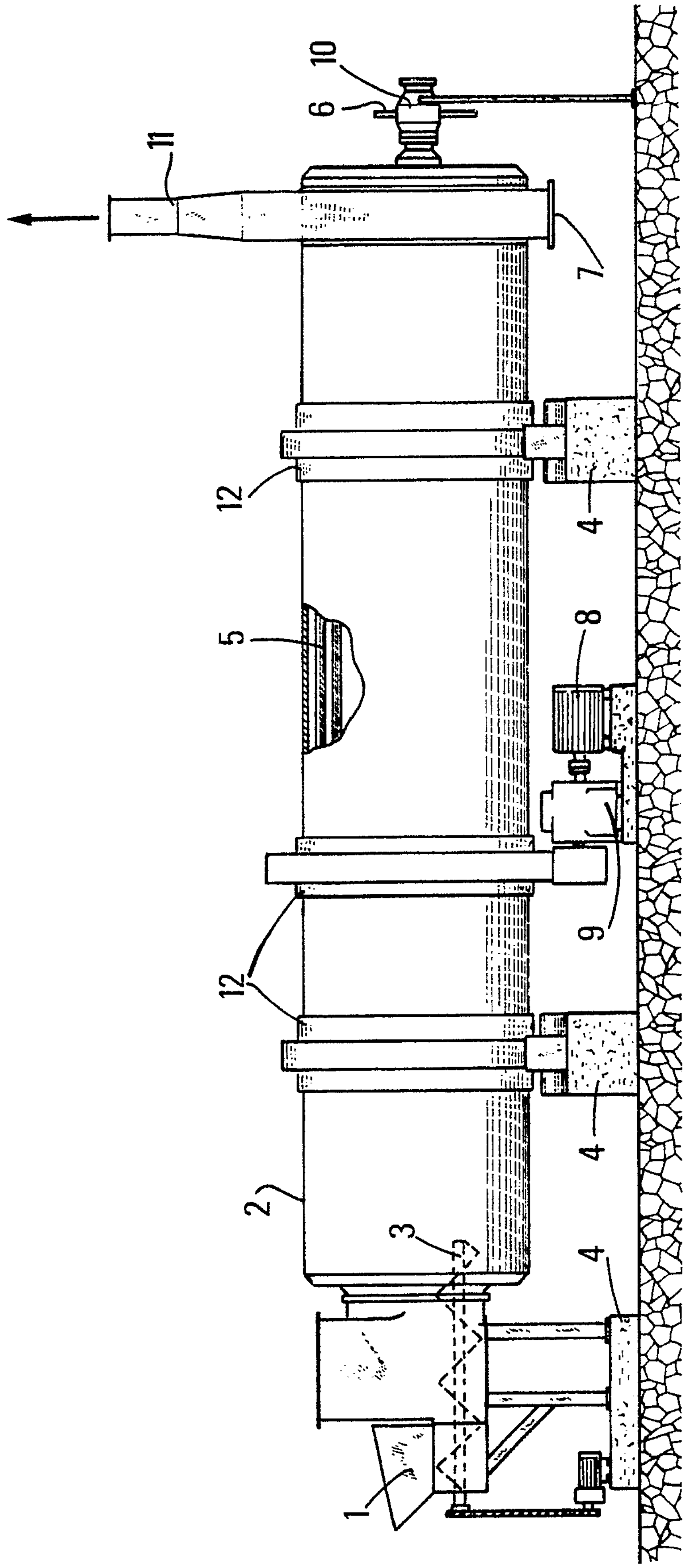
11
10
6
7
12
4
5
8
9
12
4
2
3
4
1

Office européen des brevets

# RAPPORT DE RECHERCHE EUROPEENNE

Numero de la demande

EP 90 40 1811

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 286 654 (SIMPSON et al.)<br>* Pages 1,2; figures 1,2 * | 1 | B 01 J 37/20<br>B 01 J 37/16<br>B 01 J 8/10<br>F 26 B 11/04 |
| A | BE-A- 854 240 (MONTEDISON)<br>* Page 1; figures 1,2 * | 1 | |
| D,A | US-A-4 719 195 (TOULHOAT et al.) | | |
| D,A | FR-A-2 627 104 (IFP) | | |
| D,A | EP-A-0 153 233 (EURECAT) | | |
| D,A | EP-A-0 303 525 (EURECAT) | | |

DOMAINES TECHNIQUES RECHERCHES (Int. Cl.5)

B 01 J
F 26 B

Le présent rapport a été établi pour toutes les revendications

| Lieu de la recherche | Date d'achèvement de la recherche | Examinateur |
|---|---|---|
| LA HAYE | 10-10-1990 | LO CONTE C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)